# EUROPÄISCHE PATENTSCHRIFT

(11) **EP 2 423 522 B1**
(45) Veröffentlichungstag und Bekanntmachung des Hinweises auf die Patenterteilung: **18.06.2014**
(21) Anmeldenummer: 10174675.8
(22) Anmeldetag: 31.08.2010
(51) Int. Cl.: F16C 23/08, F16C 31/04, F16C 35/077

(54) **Wälzgelagerte Vorrichtung mit Hülse**
Rolling bearing device with sleeve
Dispositif de roulement doté d'un manchon

(43) Veröffentlichungstag der Anmeldung: 29.02.2012
(73) Patentinhaber: Siemens Aktiengesellschaft, 80333 München (DE)
(72) Erfinder: Butz, Felix, 50939, Köln (DE)

(56) Entgegenhaltungen:
- EP-A1- 0 293 897
- EP-A1- 1 225 352
- AT-B- 104 039
- US-A- 5 320 430

## Beschreibung

Die Erfindung betrifft eine wälzgelagerte Vorrichtung mit einer Welle, die durch zumindest ein Wälzlager an einem Abschnitt der Vorrichtung gelagert ist, wobei das Wälzlager zumindest einen an der Welle angeordneten Innenring, einen an den Abschnitt angeordneten Außenring und dazwischen angeordnete Wälzkörper aufweist.

Wälzgelagerte Einheiten bzw. Baugruppen, die eine axiale Bewegung von hochgenauen Vorrichtungen ermöglichen, müssen eine spielfreie oder vorgespannte Führung aufweisen. Diese Führung wird durch hochgenaue und im Mikrometerbereich aufeinander maßgeblich angepasste Oberflächen und Wälzkörper erreicht.

Vorrichtungen, die innere zeitlich veränderliche Verlustwärmequellen aufweisen, beeinflussen die Vorspannungssituation und damit die Führung der Einheit bzw. der Baugruppe maßgeblich. Der Wärmeeintrag in die Einheit und die angrenzenden Einheiten sind meist ungleichmäßig. Durch deren unterschiedliche Eigenschaften Wärme aufzunehmen bzw. abzugeben, stellen sich somit unterschiedliche Betriebstemperaturen ein. Die einzelnen Elemente der unterschiedlichen Baugruppen dehnen sich somit in Folge der unterschiedlichen Betriebstemperaturen thermisch unterschiedlich aus. Als Folge davon können die Wälzkörperkontakte entweder spielbehaftet oder derart hoch vorgespannt sein, dass die Funktion spielfreie Führung nicht mehr gewährleistet ist oder es durch Überlastung des Wälzkontaktes zum Ausfall des Maschinenelements kommt.

Der Einsatz geschwächter Wälzkörper trägt zwar zur Erhöhung der Betriebssicherheit der Baugruppe bei, wie dies aus der DE 24 07 479 A1 bekannt ist. Problematisch ist dabei die für die Funktionsweise benötigte genaue Ausrichtung von hohlgebohrten Kugeln zu den Kontaktflächen.

Ferner offenbaren z.B. die Druckschriften AT 104039 und EP 293 897 je eine wälzgelagerte Vorrichtung mit einer Welle, die durch zumindest ein Wälzlager an einem Abschnitt der Vorrichtung gelagert ist, wobei das Wälzlager zumindest einen an der Welle angeordneten Innenring einen an dem Abschnitt angeordneten Außenring und dazwischen angeordnete Wälzkörper aufweist, wobei zwischen Außenring und Abschnitt ein Käfig vorgesehen ist, die eine axiale Verschiebung des Außenrings des Wälzlagers bei einer axial gerichteten Kraft zulässt, wobei die Hülse zumindest zwei Reihen von Wälzkörpern aufweist, die in Ausnehmungen des Käfigs angeordnet sind.

Ausgehend davon liegt der Erfindung die Aufgabe zugrunde, eine wälzgelagerte Vorrichtung bereitzustellen, bei der auch thermische Spannungen die Wälzlager in ihrer Funktionsweise nicht beeinträchtigen.

Die Lösung der gestellten Aufgabe gelingt durch eine wälzgelagerte Vorrichtung mit einer Welle, die durch zumindest ein Wälzlager an einem Abschnitt der Vorrichtung gelagert ist, wobei das Wälzlager zumindest einen an der Welle angeordneten Innenring einen an dem Abschnitt angeordneten Außenring und dazwischen angeordnete Wälzkörper aufweist, wobei zwischen Außenring und Abschnitt eine Hülse vorgesehen ist, die eine axiale und/oder radiale Verschiebung des Außenrings des Wälzlagers bei einer axial und/oder radial gerichteten Kraft zulässt.

Erfindungsgemäß sind dabei in der Hülse zwei oder mehrere Reihen von hohlgebohrten Wälzkörpern vorgesehen, so dass sich die Auflageflächen der Wälzkörper an dem Abschnitt gleichmäßig verteilen.

Durch die Anordnung einer Hülse zwischen Außenring des Wälzlagers und den Abschnitt der Vorrichtung sind nunmehr Bewegungen des Außenrings in axialer Richtung möglich, die aufgrund von Spannungen resultierend aus thermischen Dehnungen der Welle innerhalb des Wälzlagers entstehen. Beispielsweise wird durch die thermische Ausdehnung einer Welle der Innenring in axialer und/oder radialer Richtung verschoben. Aufgrund dieser Tatsache entstehen Spannungen, die der Wälzkörper versucht, auf den Außenring zu übertragen. Die oben genannten Nachteile werden nun erfindungsgemäß dadurch vermieden, dass nunmehr der Außenring axial und/oder radial die Bewegung aufgrund der Hülse mitmacht, ohne dabei die Funktionsfähigkeit des Wälzlagers zu beeinträchtigen. Es ist somit immer eine spielfreie Führung gewährleistet.

Um die Verteilung punktuell in diesem Abschnitt weiter zu verteilen, sind in axialer Richtung bezüglich der Welle betrachtet, die Ausnehmungen in denen hohlgebohrten Wälzkörper versetzt angeordnet.

Weitere Vorteile der einzelnen Ausführungsformen sind der Figurenbeschreibung zu entnehmen.

Die Erfindung sowie weitere vorteilhafte Ausgestaltungen der Erfindung sind in den folgenden Figuren beschrieben. Darin zeigen:
- FIG 1: dem prinzipiellen Aufbau einer wälzgelagerten Vorrichtung,
- FIG 2: eine Hülse mit Platten,
- FIG 3: eine Hülse mit integriertem Führungsbolzen,
- FIG 4: eine gesamte Hülse mit der Hülse nach FIG 2,
- FIG 5: eine gesamte Hülse mit der Ausführung der Hülse nach FIG 3.

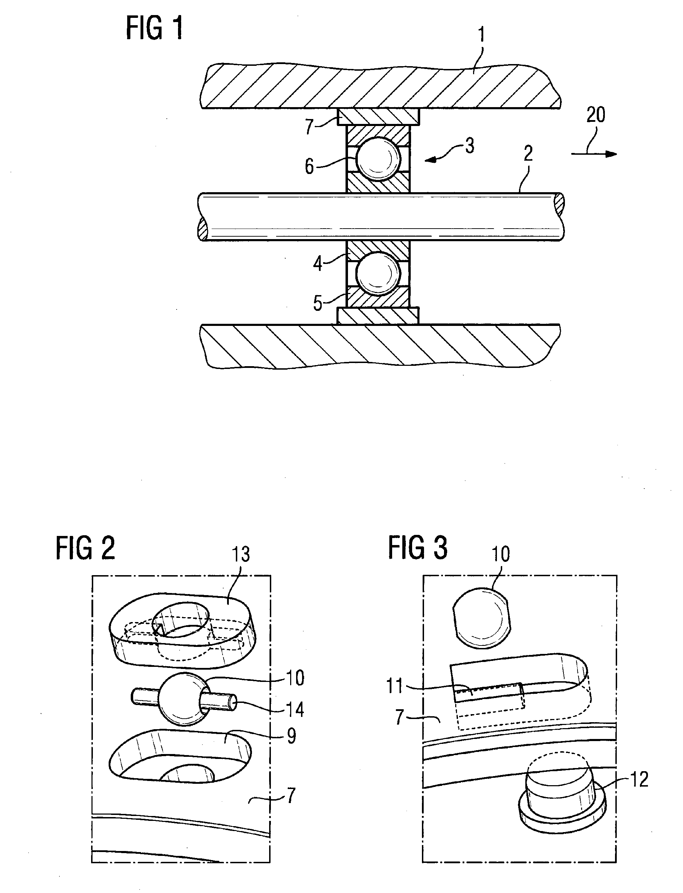

FIG 1 zeigt in prinzipieller Darstellung eine wälzgelagerte Vorrichtung 1, wobei eine Welle 2 durch ein Wälzlager 3 in einem Abschnitt der wälzgelagerten Vorrichtung 1 gelagert ist. Das Wälzlager 3 weist an der Welle 2 einen Innenring 4 auf, der durch einen Wälzkörper 6 in einem Außenring 5 gelagert ist. Zwischen Außenring 5 und wälzgelagerter Vorrichtung 1 ist eine Hülse 7 vorgesehen, die die axiale und/oder radiale Ausdehnung der Welle 2 aufnimmt, so dass sich zwischen Außen- und Innenring des Wälzlagers 3 keine Verspannungen einstellen, die zur Beschädigung von Wälzkörper und/oder Lauffläche des Wälzlagers 3 im Innen- oder Außenring führen.

FIG 2 zeigt in einer Detaildarstellung eine Hülse 7 mit einer Ausnehmung 9, in die eine Platte 13 mit dementsprechenden Vorprägungen einsetzbar ist, wobei die Vorprägungen einen separaten Führungsbolzen 14 und einen dazugehörigen hohlgebohrten Wälzkörper 10, insbesondere eine hohlgebohrte Kugel aufnehmen. Diese Platte 13 kann nunmehr in die dafür vorgesehene Ausnehmung 9 eingesetzt, vorzugsweise lösbar eingeschnappt werden.

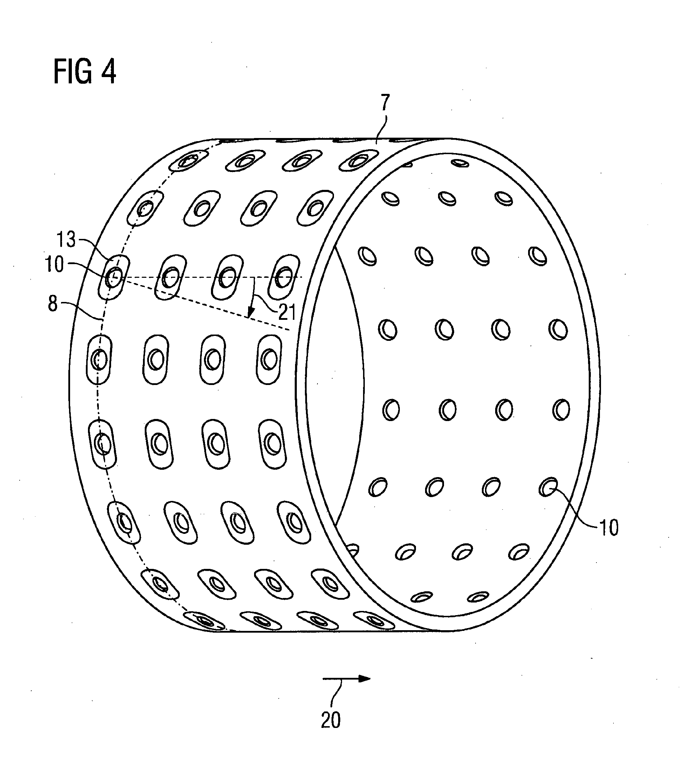

Durch Einsatz einer Vielzahl derartiger Platten 13 in die dafür vorgesehenen Ausnehmungen der Hülse 7, ergibt sich nunmehr eine Hülse 7, wie sie in FIG 4 dargestellt ist. Diese Hülse 7 sitzt mit ihrer Innenseite nunmehr auf dem Außenring 5 des Wälzlagers 3 und erlaubt somit dem Außenring 5 des Wälzlagers 3 über die einzelnen hohlgebohrten Wälzkörper eine axiale Bewegung 20 innerhalb der wälzgelagerten Vorrichtung 1.

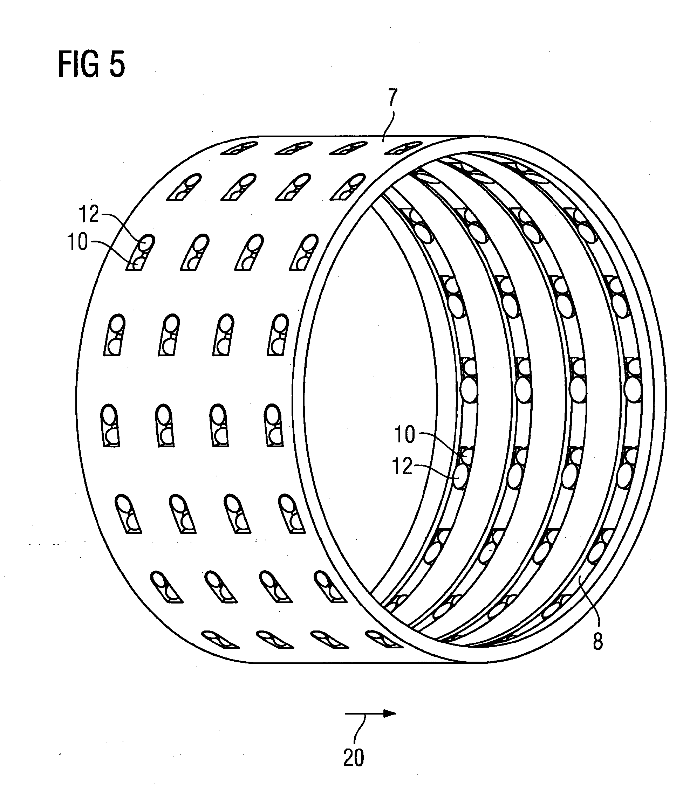

In einer weiteren Ausführungsform weist die Hülse 7 bereits integrierte Führungsbolzen 11 auf, auf die jeweils die hohlgebohrte Wälzkörper 10 angeordnet werden, wobei dabei zusätzlich Führungselemente 12 vorzusehen sind, um den hohlgebohrten Wälzkörper 10 letztendlich auf dem Führungsbolzen zu positionieren und zu fixieren. Damit ergibt sich eine Hülse 7 gemäß FIG 5, die ebenfalls zwischen Außenring 5 des Wälzlagers 3 und wälzgelagerter Vorrichtung 1 eingesetzt wird.

Der Durchmesser der hohlgebohrten Wälzkörper in radialer Richtung ist dabei grundsätzlich geringfügig größer als die Dicke der Hülse 7. Nur dadurch lässt sich eine axiale und spielfreie Bewegung der Hülse 7 erreichen.

Auf den Führungsbolzen der Ausführungsbeispiele gemäß FIG 2, 3 kann selbstverständlich auch mehr als ein hohlgebohrter Wälzkörper 10 vorgesehen werden.

Des Weiteren weisen die Hülsen 7 nach FIG 4, 5 axial hintereinander angeordnete hohlgebohrte Wälzkörper 10 auf. Ebenso sind in Umfangsrichtung betrachtet, wie in FIG 4 prinzipiell dargestellt, mehrere hohlgebohrte Wälzkörper 10 am Umfang vorzugsweise mit äquidistantem Abstand verteilt.

Die hohlgebohrten Wälzkörper 10 sind auch, in axialer Richtung auf der Hülse 7 betrachtet, versetzt anordenbar - dazu sind die Ausnehmungen der Hülsen 7 dementsprechend vorzusehen. Dies kann durch einen Winkelversatz 21 oder in einer helixartigen Anordnung der Ausnehmungen auf der Hülse 7 bei Herstellung der Hülse 7 realisiert werden.

Selbstverständlich kann eine der oben beschriebenen Hülsen 7 auch zwischen Welle 2 und einem Innenring 4 eines Wälzlagers 3 angeordnet werden.

Damit ergeben sich grundsätzlich drei Positionierungsmöglichkeiten - zwischen Außenring 5 des Wälzlagers 3 und Vorrichtung 1, oder zwischen Innenring 4 des Wälzlagers 3 und Welle 2, oder sowohl zwischen Außenring 5 des Wälzlagers 3 und Vorrichtung 1 auch zwischen Innenring 4 des Wälzlagers 3 und Welle 2.

Erfindungsgemäß gestattet nun die Hülse 7, unabhängig von der oben beschriebenen Ausführungsform, bei radialer und/oder axialer thermischer Ausdehnung der Welle 2 eine spielfreie Führung des Wälzlagers 3. Dabei wird die radiale Ausdehnung durch die hohlgebohrten Wälzkörper 10 aufgenommen, die auf ihren Führungsbolzen 11, 14 deshalb mit Spiel angeordnet sind. Die hohlgebohrten Wälzkörper 10 können somit leichter zusammengepresst werden und zu einer spielfreien Führung beitragen.

Eine axiale Ausdehnung wird durch Bewegung der Hülse 7 beispielsweise zwischen Außenring 5 und Vorrichtung 1 aufgenommen, indem sich der Außenring 5 mitbewegt. Die Hülse 7 weist also immer Wälzkontakt auf, sodass eine spielfreie Führung gewährleistet ist.

Die spielfreie Führung ist bei hochgenauen Werkzeugmaschinen, wie z.B. Spindelantrieben notwendig.

## Patentansprüche

1. Wälzgelagerte Vorrichtung (1) mit einer Welle (2), die durch zumindest ein Wälzlager (3) an einem Abschnitt der Vorrichtung (1) gelagert ist, wobei das Wälzlager (3) zumindest einen an der Welle (2) angeordneten Innenring (4) einen an dem Abschnitt angeordneten Außenring (5) und dazwischen angeordnete Wälzkörper (6) aufweist, wobei zwischen Außenring (5) und Abschnitt eine Hülse (7) vorgesehen ist, die eine axiale und/oder radiale Verschiebung des Außenrings (5) des Wälzlagers (3) bei einer axial und/oder radial gerichteten Kraft zulässt, wobei die Hülse (7) zumindest zwei Reihen (8) von hohlgebohrten Wälzkörpern (10) aufweist, die in Ausnehmungen (9) der Hülse (7) angeordnet sind.

2. Wälzgelagerte Vorrichtung (1) nach Anspruch 1, **da**- **durch gekennzeichnet**, dass die Ausnehmungen (9) in axialer Richtung bezüglich der Welle (2) betrachtet versetzt angeordnet sind.

3. Wälzgelagerte Vorrichtung (1) nach einem der vorhergehenden Ansprüche, **dadurch gekennzeichnet, dass** die Ausnehmungen (9) einen in die Hülse integrierten Führungsbolzen (11) aufweisen, der zur Aufnahme des hohlgebohrten Wälzkörpers (10) dient.

4. Wälzgelagerte Vorrichtung (1) nach Anspruch 3, **da**- **durch gekennzeichnet**, dass die Ausnehmung ein Führungselement aufweist, das in die Ausnehmung des Hülse (7) eingesetzt zusammen mit dem Führungsbolzen (11) die Positionierung des hohlgebohrten Wälzkörpers (10) in der Ausnehmung (9) übernimmt.

5. Wälzgelagerte Vorrichtung (1) nach einem der Ansprüche 1 oder 2, **dadurch gekennzeichnet,**
**dass** in der Ausnehmung (9) eine dazu korrespondierende Platte (13) vorgesehen ist, die einen separaten Führungsbolzen (14) mit zumindest einem darauf angeordneten hohlgebohrten Wälzkörper (10) aufweist.

6. Wälzgelagerte Vorrichtung (1) nach Anspruch 5, **da**- **durch gekennzeichnet**, dass die Platte (13) in die Ausnehmung (9) einschnappbar ist.

## Claims

1. Apparatus with rolling bearing (1) having a shaft (2), which is mounted on a section of the apparatus (1) by means of at least one rolling bearing (3), with the rolling bearing (3) comprising at least one inner ring (4) arranged on the shaft (2), an outer ring (5) arranged on the section and rolling elements (6) arranged therebetween, with a sleeve (7) being provided between the outer ring (5) and section, said sleeve permitting an axial and/or radial displacement of the outer ring (5) of the rolling bearing (3) in the case of an axially and/or radially directed force, with the sleeve (7) comprising at least two rows (8) of hollow-drilled rolling elements (10), which are arranged in recesses (9) of the sleeve (7).

2. Apparatus with rolling bearing (1) according to claim 1, **characterised in that** the recesses (9) are arranged offset when viewed in the axial direction in respect of the shaft (2).

3. Apparatus with rolling bearing (1) according to one of the preceding claims, **characterised in that** the recesses (9) comprise a guide pin (11) integrated into the sleeve, said guide pin being used to accommodate the hollow-drilled rolling element (10).

4. Apparatus with rolling bearing (1) according to claim 3, **characterised in that** the recess comprises a guide element, which, when inserted into the recess of the sleeve (7), assumes the positioning of the hollow-drilled rolling element (10) in the recess (9) together with the guide pin (11).

5. Apparatus with rolling bearing (1) according to one of claims 1 or 2, **characterised in that** a plate (13) corresponding to the recess (9) is provided therein, said plate comprising a separate guide pin (14) with at least one hollow-drilled rolling element (10) arranged thereupon.

6. Apparatus with rolling bearing (1) according to claim 5, **characterised in that** the plate (13) can be snapped into the recess (9).

## Revendications

1. Dispositif ( 1 ) monté sur roulement comprenant un arbre ( 2 ) qui est monté sur une partie du dispositif ( 1 ), le palier ( 3 ) à roulement ayant au moins une bague ( 4 ) intérieure disposée sur l'arbre ( 2 ), une bague ( 5 ) extérieure disposée sur la partie et des corps (6) de roulement disposés entre elles, dans lequel il est prévu, entre la bague ( 5 ) extérieure et la partie, un manchon ( 7 ) qui autorise, lors d'une force dirigée radialement et/ou radialement, un déplacement axial et/ou radial de la bague ( 5 ) extérieure du palier ( 3 ) à roulement, le manchon ( 7 ) ayant au moins deux rangées ( 8 ) de corps ( 10 ) de roulement alésés qui sont disposes dans des évidements ( 9 ) du manchon ( 7 ).

2. Dispositif ( 1 ) monté sur roulement suivant la revendication 1, **caractérisé en ce que** les évidements ( 9 ) sont décalés, considéré dans la direction axial par rapport à l'arbre ( 2 ).

3. Dispositif ( 1 ) monté sur roulement suivant l'une des revendications précédentes, **caractérisé en ce que** les évidements ( 9 ) ont un axe ( 11 ) de guidage, qui est intégré dans le manchon et qui sert à la réception des corps ( 10 ) de roulement alésés.

4. Dispositif ( 1 ) monté sur roulement suivant la revendication 3, **caractérisé en ce que** l'évidemment a un élément de guidage qui, inséré dans l'évidemment du manchon ( 7 ), prend en charge ensemble avec l'axe ( 11 ) de guidage le positionnement du corps (10) de roulement alésé dans l'évidemment ( 9 ).

5. Dispositif ( 1 ) monté sur roulement suivant la revendication 1 ou 2, **caractérisé en ce qu'**il est prévu dans l'évidemment ( 9 ) une plaque ( 13 ) correspondante qui a un axe ( 14 ) de guidage distinct avec au moins un corps ( 10 ) de roulement alésé qui y est disposé.

6. Dispositif ( 1 ) monté sur roulement suivant la revendication 5, **caractérisé en ce que** la plaque ( 13 ) peut s'encliqueter dans l'évidemment ( 9 ).
